# EUROPEAN PATENT APPLICATION

(11) **EP 1 026 886 A2**
(43) Date of publication of application: **09.08.2000**
(21) Application number: 00300769.7
(22) Date of filing: 31.01.2000
(51) Int. Cl.: H04N 5/44, H04N 5/60

(54) **Screen display**

(30) Priority: 21.05.1999 GB 9911757; 03.02.1999 GB 9902289
(71) Applicant: Pace Micro Technology PLC, Shipley, West Yorkshire BD18 3LF (GB)
(72) Inventor: Cook, Michael, Shipley BD18 3LF (GB); Smith, Gerard, Shipley BD18 3LF (GB)
(74) Representative: Wood, Graham

(57) **Abstract**

The invention relates to the generation of a video display on a display screen of a television set when the set has been selected to receive an audio only channel. In digital data television systems it is possible to select audio only channels typically produced from radio station transmissions. Conventionally when this type of channel is selected a blank screen with a channel identifying message is generated as the video display on the display screen as the television is required to be switched on to receive the audio channel. The invention provides for the generation of a display which changes condition during the selection of the audio channel and which may, in one embodiment, change condition in response to changes in the audio signal.

## Description

The invention to which this application relates is a means for generating a display on a display screen such as, for example, the screen of a television or monitor and to generate the display in a manner which is linked or otherwise associated with an audio signal for display from an apparatus in one embodiment or the display is generated in response to the user selecting to listen to an audio only service.

At the present time, and increasingly, a television set or monitor can be provided with or connected to receiving means for receiving a plurality of digital data relating to video and/or audio signals and for processing said signals so that a video or visual display can be generated on the screen and an audio sound can be generated in combination with the video display and in sequence therewith. For example, if the video display shows a person talking then the audio sound will generate the noise of the spoken word in sequence with the display and this is obviously a key factor in the successful use and viewing of television sets and monitors in general.

With the provision of digital data, there is a much wider range of channels available for view and, in many cases, a number of said channels comprise audio only channels which are typically generated by radio stations and/or other music channel stations so that when the person selects that channel, there is no, or at best a blank screen, display generated and there is only an audio sound which is generated using the audio data received for that user selected channel. However the television is required to be switched on to receive the audio only channel via the data receiver.

These audio only channels are generated from streams of digital data which are typically transmitted from a remote location to receivers belonging to users who are typically subscribers to the broadcast service. When received at the receiver the data is decoded and processed. As the receivers are provided to receive video and/or text data for other channels they are provided as part of or are connected to display screens such as television sets. Thus when a user selects to listen to the audio channel the television set is normally switched on and the user can select to listened to the receiver via a television set. During the transmission of these audio signals or music channels it is normally the case that a blank screen is generated on the television display with the addition of some means of identifying the particular audio channel which is being listened to. This type of display is not particularly interesting for the user to look at as, although they are principally interested in listening to the music, the generation of a blank fixed screen display on the television set is not particularly attractive or interesting.

It is known, for example from patent US3927402, that an LED light system can be used in conjunction with a speaker to cause the LED lights to flash on and off in response to the speaker noise but this is an additional or add-on feature which can be used to determine the operation of speakers rather than for the purpose of enhancing the visual display. It is also known to provide means in a television which can generate a fixed display but this sort of display is not in response to the selection of an audio only channel.

The aim of the present invention is to provide a visual display which can be used in conjunction with the user selection of an audio data channel at the receiver apparatus and which visual display is either generated from a remote location and broadcast for reception by the receiver or alternatively may be generated by the receiver for display on a display screen connected thereto.

In a first aspect of the invention there is provided apparatus for receiving and processing digital data to generate video, audio and/or text on a display screen and via speakers, said apparatus comprising a receiver for receiving data broadcast from a remote location and which receiver allows the generation of audio, video and/or text to a user via speakers and/or display screen respectively connected with the receiver said data processed to generate a plurality of user selectable channels, at least one of the channels comprising audio only and characterised in that if the user selects an audio only channel, the audio sound generated by the receiver passes to the speakers to be heard by the user and the receiver includes a means for generating a video display from data held in a memory in the receiver on the display screen for the duration of the selection of the audio only channel and during which the video display changes condition.

Typically the receiver for receiving data broadcast from a remote location and allows the generation of audio, video and/or text to a user via speakers and/or display screen respectively and the data is processed to generate a plurality of user selectable channels typically being a mixture of audio and video channels which show conventional television programmes and audio only channels which are typically generated by radio stations and transmitted by the broadcaster. The data which is transmitted is transmitted as digital data via digital data transmissions systems which are now well known.

In one embodiment the display which is generated changes condition in response to the audio data input stream to the receiver. In one embodiment, video data to be used when an audio channel is selected for listening is transmitted as part of the data input stream to the receiver. In an alternative and preferred embodiment the data for generation of the video display is held in a memory in the receiver and is accessed and processed whenever one of the audio only channels is selected.

In one form of the invention the display which is generated is a bar display of the music spectrum and said bar changes sand visually appears to pulse in time with changes in the audio data. Alternatively, or in combination, a more complex display can be generated, such as for example, to generate a series of blocks of colour which are arranged in differing forms to form a kaleidoscope type effect. Typically the, patterns can twist and turn and move in time and in response to the changes in amplitude, bass, volume or any identifiable change in the audio signal.

The displays which can be generated will therefore be seen to be of a particular graphics form but are typically generated and changed in response to the data and therefore can be semi-abstract or computer art type images.

In one embodiment the user can be in control of the basic type of video image, or the video image can be controlled to change after a random time or in response to sudden audio data change.

In a further aspect of the invention there is provided a receiver for receiving broadcast digital data from a remote location, said data comprising at least audio data for a number of user selectable channels which data is processed by the receiver and audio sound is generated to the user of the apparatus via apparatus connected with the receiver and characterised in that the apparatus comprises speakers and a display screen and, when the user selects an audio only channel for which no video or text data is received the receiver accesses data held in a memory in the receiver processes the same and causes the generation of a video display on the display screen for the duration of the user selection of the audio only channel.

Typically the audio data is monitored by the receiver and a significant change in the sound to be generated causes a change in condition of the video display.

Typically the display screen is raster based and the generation of the video display on the screen is caused by the data held in the receiver and associated software.

In a further aspect of the invention there is provided apparatus for the generation of a video display and audio, said apparatus comprising a television set comprising a display screen and at least one speaker, a receiver provided in connection with the same, said receiver capable of receiving digital data from a remote location and processing the same to generate video or text on the display screen and audio, said data transmitted to represent a number of user selectable channels and at leas t one of the channels is formed from data received from the remote location which allows the generation of audio only and characterised in that if an audio channel is selected by the user the receiver generates the audio from data received from the remote location and generates a video display for display on screen from data held in memory in said receiver.

In one embodiment the visual display which is generated undergoes random change unrelated to the audio data being transmitted at that time but preferably the visual display changes or is acted upon in accordance with the audio data received and generated.

In one embodiment, the visual display which is generated has the appearance of a series of light effects which change and/or switch on and off, preferably in conjunction with changes in the audio data received so that, for example, the amplitude, frequency or other characteristic of the music can be used to generate or act as prompts for changes in the visual display. The key difference in this invention and the normal transmission of broadcast data is that in this case the audio data and video data are generated so that the visual display compliments the audio data and adds to the enjoyment of the same. In one embodiment the audio data, and changes in the same, appears to control the video display and this is in contrast to the conventional video-audio effect created wherein the audio data is provided to complement the audio data by providing the spoken word, or alternatively to provide music as a background to the visual display.

In one example, there may be depicted a number of different coloured areas of light that change intensity or condition with changes in the audio data, alternatively, the screen can be formed of one colour which changes to another colour and/or patterned effect and so on in conjunction with changes in the characteristics of the audio data and, yet further, a kaleidoscope effect can be generated which changes in time to changes in the audio data.

In a yet further aspect of the invention there is provided apparatus for the generation of a video display and audio, said apparatus comprising a television set comprising a display screen and at least one speaker, a receiver provided in connection with the same, said receiver capable of receiving digital data from a remote location and processing the same to generate video or text on the display screen and audio, said data transmitted to represent a number of user selectable channels and at least one of the channels is provided by an audio only broadcaster and is formed at the receiver from data received from the remote location which allows the generation of audio only and characterised in that if an audio channel is selected by the user the additional CPU band width that is available when only audio data is broadcast from the remote location for the selected channel is used to carry further data which when processed at the receiver allows the generation of a visual display on the display screen which is synchronous with the audio data received and changes in time with the audio data.

Thus, previously unused bandwidth for the transmission of audio only channels data can be used and the audio data controls the changes in the visual display and/or the visual display is changed in reaction or in a predetermined manner with reference to the audio data.

It is envisaged that the provision of the visual display in conjunction with the audio display will allow the receiver and display screen to be operated to provide entertainment such as, for example, to provide lighting effects at a premises without the need to hire an external disco or other external lighting effects.

Specific embodiments of the invention will now be described wherein:
Figures 1A and 1B illustrate one form of display,
Figure 2 illustrates a further form of display according to the invention;
Figure 3 illustrates a yet further form of display;
Figure 4 illustrates in schematic fashion the components of apparatus in which the invention can be incorporated; and
Figures 5A and B illustrate different display screens which can be generated.

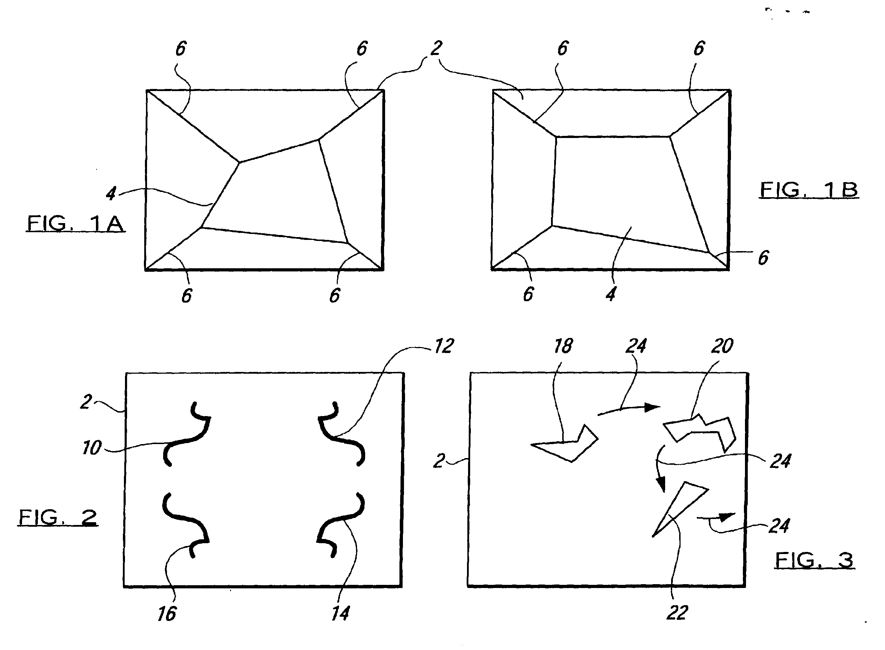

Referring now to Figures 1A and B there is illustrated one form of graphic display on a screen 2 of a television which his generated using control of the raster screen via software in the receiver and using data from the receiver. The display comprises a four sided shape 4 with lines 6 depending from the corners of the same to the corners of the screen. The comparison of Figures 1A and 1B illustrate how the display can change from frame to frame in response to the audio data. In this embodiment the lengths of the lines 6 can be controlled to change in response to the amplitude of the audio data received and each of the lines is respectively linked to one of four wave bands so that each alters independently. It is also possible that to provide a more complex display over time, successive frames can be superimposed over each other such that for example 5 frames can be superimposed and when the 6^{th} frame is created the first is withdrawn and so on. It is possible that in addition to the lines shown in Figures 1A and B the areas defined by the lines can be caused to change colour in response to the tempo of the audio data so that the display changes in response to amplitude and tempo.

Figure 2 illustrates an alternative display whereby there is provided a pattern 10 which, by using four fold symmetry video data techniques, is produced at locations 12,14,16. The shape and movement of the pattern is again controlled in response to one or a combination of features of the audio data.

Figure 3 illustrates a yet further embodiment of the invention wherein there are provided shapes 18,20,22. The speed of the movement across the screen, as indicated by arrows 24, is controlled by the tempo of the audio data and the direction of movement is controlled by the sound frequency. The shapes are provided to interact and "bounce" off each other to further enhance the visual display.

Referring now to Figure 4 there is illustrated apparatus in accordance with which the invention can be used, said apparatus comprising a receiver 102 for the reception of broadcast digital data from a remote source 104 from which data can be transmitted via satellite, cable or terrestrial broadcast medium or any other transmission medium. The receiver is connected to a display screen 106 and speakers 108 which can, in one typical embodiment, all be incorporated in a television set and through which visual display and audio display generated via the receiver and from the data received can be shown and played.

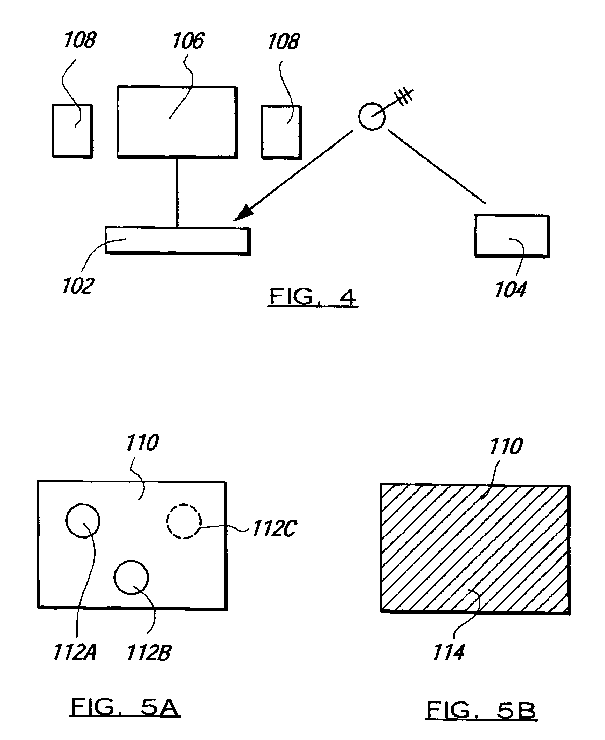

Figure 5A illustrates one display which can be generated in accordance with the present invention and occurs when a user selects to receive via the receiver, a broadcast channel which comprises audio data such as, for example, BBC Radio 1 or any other radio or audio only channel which is broadcast and received. The data which is received would conventionally comprise audio only data which is processed and generated via speakers 108 to the user and a blank screen is generated indicating the selected channel. However, in accordance with this embodiment of the invention, additional video data is transmitted for that channel over the available space in the receiver CPU (central processing unit) data bandwidth to be received by the receiver. When the video data is generated, the receiver can create a visual display 110 from the video data on the screen as shown. In the embodiment of Figure 5A, the display is a series of lights 112 and as shown, in one sequence, two of the lights 112A, 112B are on and the other light 112C is off but this sequence and variation of sequences is changed in time with changes in the audio data so as to provide a visual effect which is associated with the audio sound being played through the speakers 108 to provide a combined audio and visual effect to the user.

Figure 5B illustrates an alternative visual display wherein there is provided a screen display 114 of one colour which is changed to a subsequent colour and so on as the changes in music occur and in a further embodiment, not shown, kaleidoscope effects or other patterned effects may be created on the screen which change again with the changes in the music received so as to provide the required combined visual and/or audio effect.

Although described with reference to changes in music, as this is believed to be the most common benefit of the invention, it should be appreciated that the use of the visual display which is generated to change in sequence with audio data received can be used for any other use where the same would be deemed to be of advantage.

Thus it will be seen from the embodiments of this invention that there is a considerable visual enhancement created on a previously blank fixed screen. This visual enhancement improves the attractiveness of the screen to the user and enjoyment of the audio data being received and transmitted.

## Claims

1. Apparatus for receiving and processing digital data to generate video, audio and/or text on a display screen and via speakers, said apparatus comprising a receiver for receiving data broadcast from a remote location and which receiver allows the generation of audio, video and/or text to a user via speakers and/or display screen respectively connected with the receiver said data processed to generate a plurality of user selectable channels, at least one of the channels comprising audio only and characterised in that if the user selects an audio only channel, the audio sound generated by the receiver passes to the speakers to be heard by the user and the receiver includes a means for generating a video display from data held in a memory in the receiver on the display screen for the duration of the selection of the audio only channel and during which the video display changes condition.

2. Apparatus according to claim 1 characterised in that the display which is generated changes condition in response to the audio data input stream to the receiver.

3. Apparatus according to claim 1 characterised in that data to be used to generate the video display is transmitted as part of the data input stream to the receiver and then stored in memory in the receiver for selective retrieval upon user selection of an audio channel.

4. Apparatus according to claim 1 characterised in that the data for the generation of the video data is provided stored in the memory of the receiver and is accessed and processed whenever one of the audio channels is selected.

5. Apparatus according to claim 1 characterised in that the video display generated is a bar which displays the music spectrum and said bar changes visually to pulse in time with changes in the audio data.

6. Apparatus according to claim 1 characterised in that the video data comprises a series of blocks of colour which are arranged in differing forms to form a kaleidoscope type effect.

7. Apparatus according to claim 1 characterised in that the video display changes in time and in response to the changes in any or any combination of amplitude, bass, volume or any identifiable change in the audio data.

8. Apparatus according to claim 1 characterised in that the display screen is operated using raster controls and the generation of the video display on the screen is controlled by software in the receiver connected to the display screen.

9. A receiver for receiving broadcast digital data from a remote location, said data comprising at least audio data for a number of user selectable channels which data is processed by the receiver and audio sound is generated to the user of the apparatus via apparatus connected with the receiver and characterised in that the apparatus comprises speakers and a display screen and, when the user selects an audio only channel for which no video or text data is received the receiver accesses data held in a memory in the receiver processes the same and causes the generation of a video display on the display screen for the duration of the user selection of the audio only channel.

10. A receiver according to claim 9 characterised in that the audio data is monitored by the receiver and a change in the audio data over a predetermined level is detected and the receiver changes the video display in response thereto.

11. Apparatus for the generation of a video display and audio, said apparatus comprising a television set comprising a display screen and at least one speaker, a receiver provided in connection with the same, said receiver capable of receiving digital data from a remote location and processing the same to generate video or text on the display screen and audio, said data transmitted to represent a number of user selectable channels and at least one of the channels is formed from data received from the remote location which allows the generation of audio only and characterised in that if an audio channel is selected by the user the receiver generates the audio from the data received from the remote location and generates a video display for display on screen from data held in memory in said receiver.

12. Apparatus according to claim 11 characterised in that the video display which is generated undergoes random change unrelated to the audio data being transmitted at that time.

13. Apparatus according to claim 11 characterised in that the video display which is generated changes in accordance with the audio data received and generated.

14. Apparatus according to claim 13 characterised in that the visual display which is generated has the appearance of a series of light effects which change and/or switch on and off in conjunction with changes in the audio data.

15. Apparatus for the generation of a video display and audio, said apparatus comprising a television set comprising a display screen and at least one speaker, a receiver provided in connection with the same, said receiver capable of receiving digital data from a remote location and processing the same to generate video or text on the display screen and audio, said data transmitted to represent a number of user selectable channels and at least one of the channels is provided by an audio only broadcaster and is formed at the receiver from data received from the remote location which allows the generation of audio only and characterised in that if an audio channel is selected by the user the additional CPU band width that is available when only audio data is broadcast from the remote location for the selected channel is used to carry further data which, when processed at the receiver, allows the generation of a visual display on the display screen to accompany the audio only channel selected.

16. Apparatus according to claim 15 characterised in that the data received for the visual display is synchronous with the audio data received and changes in time with the audio data.
